# EUROPEAN PATENT APPLICATION

(11) **EP 4 708 606 A1**
(43) Date of publication of application: **11.03.2026**
(21) Application number: 25195497.0
(22) Date of filing: 12.08.2025
(51) Int. Cl.: H02J 1/102, H02J 7/52, H02J 7/90, H02J 7/94

(54) **DC-DC PARALLELING CONTROL ALGORITHM**

(30) Priority: 16.08.2024 US 202463683989 P
(71) Applicant: Cummins, Inc., Columbus, Indiana 47201 (US)
(72) Inventor: SCHEUERELL, Mike James, Stillwater, 55082 (US); WOODLAND, Lane, Cannelton, 47520 (US); LIGHT-HOLETS, Jennifer Kay, Greenwood, 46143 (US); CAI, Minyu, Maplewood, 55109 (US); VIPRA, Niraj, Greenwood, 46143 (US)
(74) Representative: Cleveland Scott York

(57) **Abstract**

An energy storage system (EMS) for mobile and stationary applications includes multiple battery circuits connected in parallel via bidirectional DC-DC converters (14A-14D) and managed by centralized or distributed control. Each circuit comprises one or more electrochemical storage elements (12A-12D), and the EMS regulates current flow based on system data indicative of state-of-charge (SOC), state-of-health (SOH), temperature, and chemistry. The EMS performs active balancing by adjusting current commands to equalize SOC across circuits and isolates faulty or degraded modules when necessary. In vehicle applications, the EMS manages power flow between traction batteries, electric drive units, and low-voltage systems, supporting propulsion, regenerative braking, and accessory loads. In stationary systems, the EMS integrates with generators, renewable sources, or grid-tied inverters to coordinate energy delivery, provide backup power, and optimize battery usage. The architecture supports heterogeneous battery types, modular scalability, and fault-tolerant operation, enabling safe and efficient control of energy storage resources in a range of electrified transport and stationary power environments.

## Description

### TECHNICAL FIELD

This application generally relates to energy storage systems, and more particularly to charge balancing energy storage systems.

### BACKGROUND OF THE DISCLOSURE

Batteries are becoming widely adopted in the transportation sector, specifically in applications such as electric vehicles, hybrid electric vehicles, stationary energy storage systems, microgrids and other devices and equipment powered at least partially by stored electricity. Electrical circuits include two types of current: direct current (DC) and alternating current (AC). In certain electrical systems, an energy storage component may be connected to a common DC bus through a dedicated DC-DC converter, which is configured to "step-up" or "step-down" the voltage to match the common DC bus voltage. In other electrical systems, a dedicated DC-AC inverter is required to properly connect the energy storage component to a common AC bus.

As demands for electric vehicles increase, there is a need to provide increased travel range, power redundancy, peak shaving and other desirable operational characteristics. In certain applications, it is additionally necessary to combine different energy storage technologies, battery technologies, chemistries, manufacturers, and/or states of health (i.e., mixing old and new batteries as a result of system maintenance) in the same system.

### SUMMARY

The following summary provides a high-level overview of selected aspects of the present disclosure and is not intended to represent an exhaustive listing of all features or embodiments. Rather, it serves to highlight certain inventive principles and advantages associated with a DC-DC paralleling control algorithm and related components configured for use in charge balancing energy storage systems. Among the disclosed features are one or more batteries connected in parallel and a control interface that contribute to enhanced charge balancing and improved operational management.

Additional features, aspects, and embodiments of the present disclosure are described in greater detail below with reference to illustrative examples and implementations. The following detailed description is intended to provide further explanation and context regarding the structure, function, and integration of the disclosed battery system, including various configurations of battery circuits, interfaces, control logic, and system data handling. While specific examples are described to aid understanding, the scope of the disclosure is not limited to the particular embodiments set forth, and may encompass other variants and modifications consistent with the inventive principles described herein.

In Example 1, a battery system for distributing current among multiple batteries is provided. The battery system comprises a plurality of battery circuits connected in parallel. Each battery circuit in the plurality of battery circuits includes one or more batteries connected in series and/or parallel. Each battery in the one or more batteries is configured to store energy for use in the battery system. Each battery circuit further comprises an interface including a DC/DC converter operatively connected to the one or more batteries. The interface is configured to control, based on system data, current flow to the one or more batteries in the respective battery circuit during operation of the battery system, to facilitate balancing of each of the one or more batteries in the battery system based on operational parameters included in the system data. The operational parameters may include at least one of current, state of charge (SOC), and state of health (SOH).

In Example 2, further to Example 1, the system data includes parameters corresponding to a state of charge and a state of health for each battery in the one or more batteries.

In Example 3, further to Example 2, the system data further includes parameters corresponding to at least one of a chemistry and a temperature for each battery in the one or more batteries.

In Example 4, further to Example 1, the interface is further configured to control, based on the system data, the current flow to the one or more batteries such that the one or more batteries are designed to operate independently from other batteries in the battery system.

In Example 5, further to Example 1, the battery system further comprises a controller operatively connected to each interface. The controller is configured to receive and process the system data from the plurality of battery circuits.

In Example 6, further to Example 5, the controller is further configured to distribute current in the battery system to keep a state of charge of each of the one or more batteries within a sufficiently small vicinity of an average state of charge for the battery system. The sufficiently small vicinity may be a predetermined value, such as a percentage or absolute value, and may be stored in memory.

In Example 7, further to Example 6, the controller is further configured to distribute current by biasing an amount of current commanded by a given battery circuit in the plurality of battery circuits until the operational parameters of each of the one or more batteries are within the sufficiently small vicinity of an average of the operational parameters for the battery system.

In Example 8, further to Example 5, the plurality of battery circuits includes a first battery circuit and a second battery circuit. The first battery circuit has a first battery with a first chemistry, and the second battery circuit has a second battery with a second chemistry that is different from the first chemistry. The controller is further configured to receive an indication that the first chemistry is different from the second chemistry and to distribute current differently based on the chemistry of each battery circuit.

In Example 9, further to Example 5, the controller is further configured to receive an indication that at least one battery of the one or more batteries is faulty and, in response, to exclude the at least one battery that is faulty from the balancing.

In Example 10, further to Example 9, the at least one battery is determined to be faulty if the at least one battery has reached its end of life.

In Example 11, further to Example 5, the controller is further configured to prevent any of the plurality of batteries from being charged when the battery system is delivering power.

In Example 12, further to Example 5, the controller is further configured to prevent any of the plurality of batteries from being discharged when the battery system is receiving power.

In Example 13, further to Example 1, the battery system is integrated into an integrated power system in which the plurality of battery circuits comprises three or more battery circuits.

In Example 14, a method of operating the battery system of Example 1 is provided. The method comprises receiving an indication of a fault in the battery system, controlling current flow at a battery that is experiencing the fault so as to isolate the battery from operation using a control logic, and continuing, using the control logic, operation among non-anomalous batteries of the battery system while minimizing time periods where there is both charging and discharging of batteries in the battery system.

In Example 15, further to Example 14, the method further comprises controlling the current flow at the battery based on operational parameters.

In Example 16, further to Example 15, the operational parameters correspond to at least one of: current flow at the battery in a respective battery circuit among the plurality of battery circuits that are connected in parallel; state of charge of the battery in the respective battery circuit; state of health of the battery in the respective battery circuit; current limits of the battery in the respective battery circuit; temperature of the battery in the respective battery circuit; and chemistry of the battery in the respective battery circuit.

In Example 17, a non-transitory computer-readable medium is provided, storing a set of instructions for operating the battery system of Example 1. The set of instructions comprises one or more instructions that, when executed by one or more processors of a device, cause the device to: receive an indication of a degradation or fault in the battery system based on system data that corresponds to: (a) current flow at a battery in a battery circuit among the plurality of battery circuits, and (b) state of charge of the battery in the battery circuit; control current flow at the battery that is experiencing the fault so as to isolate the battery from operation using a control logic; and continue, using the control logic, operation among non-anomalous batteries of the battery system while minimizing time periods where there is both charging and discharging of batteries in the battery system.

In Example 18, further to Example 17, the indication of the degradation or fault is based on an imbalance in the system data relative to a measure of central tendency of the system data, and the instructions further cause the device to control the current flow at the battery to be within current limits for each of the battery circuits that are connected in the battery system.

In Example 19, further to Example 18, the system data further corresponds to at least one of: state of health of the battery in the battery circuit; temperature of the battery in the battery circuit; and chemistry of the battery in the battery circuit.

In Example 20, further to Example 17, the battery system is implemented as a kit. The kit comprises a plurality of DC/DC converters, each configured to be operatively connected to a respective battery or battery circuit, and a controller configured to execute the instructions stored on the non-transitory computer-readable medium of Example 17. The kit is configured for integration into a vehicle or stationary energy storage system to enable distributed current control and fault-tolerant battery operation based on system data.

### BRIEF DESCRIPTION OF THE DRAWINGS

The above-mentioned and other features and advantages of this disclosure, and the manner of attaining them, will become more apparent and the invention itself will be better understood by reference to the following description of embodiments of the invention taken in conjunction with the accompanying drawings, wherein:
FIG. 1 is a schematic diagram of an energy storage system for charge balancing.
FIG. 2A is a diagram graphing the state of charge of the batteries in the energy storage system of FIG. 1 during charging.
FIG. 2B is a diagram graphing the state of charge of the batteries in the energy storage system of FIG. 1 during discharging.
FIG. 3 is a diagram of a control logic for charge balancing.
FIG. 4 is a flowchart of a method of balancing the system of FIG. 1.
FIG. 5 is a schematic diagram of an energy storage system for charge balancing, the system having multiple batteries connected in series within a battery circuit, each battery circuit being connected in parallel, according to an aspect of the present disclosure.
FIG. 6 is a schematic diagram of an energy storage system with other types of energy storage.
FIG. 7A is a schematic diagram of an exemplary battery circuit comprising of multiple battery packs connected in series.
FIG. 7B is a schematic diagram of an exemplary battery circuit comprising of multiple battery packs connected in parallel.
FIG. 7C is a schematic diagram of an exemplary battery circuit comprising of multiple battery packs with a combination of both parallel and series connections.
FIG. 8 is a flowchart of an exemplary integrated power system comprising of an energy storage system, generator, and interface that provides energy to a load.

Corresponding reference characters indicate corresponding parts throughout the several views. The exemplifications set out herein illustrate exemplary embodiments of the disclosure and such exemplifications are not to be construed as limiting the scope of the disclosure in any manner.

### DETAILED DESCRIPTION

Rechargeable batteries can power a variety of systems and solutions. Some examples include hybrid electric vehicles (HEV), electric vehicles (EV), generators, storage of renewable energy for later use, and grid energy storage for various purposes such as grid stability, peak shaving, and renewable energy time shifting. In these applications, it is important to measure the state of charge (SOC) of the cells and estimate the state of health (SOH) of a battery. SOC can be defined as the available capacity (in Ah), expressed as a percentage of its rated capacity. SOH represents a measure of the battery's ability to store and deliver electrical energy compared to a new battery.

Multi-cell batteries comprising a plurality of individual battery cells require an equalization - or "balance" of charge - amongst each individual battery pack. In other words, balancing of charge can be defined as the convergence the voltage outputs of individual batteries to an average value in the overall system. This charge balancing is useful to maximize the usable capacity of the battery as well as the lifespan of the battery. For example, voltage differences between cells can cause overcharging or over-discharging of some cells, compromising battery health (SOH) and, consequently, the battery's overall lifespan. Therefore, balancing multi-cell batteries are crucial for system safety and reliability.

SOC and SOH are important factors in the management of rechargeable batteries as they describe the performance of the battery and help predict its future behavior. Unlike physical quantities (e.g., voltage or temperature), there is no direct way to measure SOC and SOH. So, these measurements consider numerous factors and parameters. For instance, SOH measurements can consider age, cycle life (number of charge/discharge cycles), capacity, internal resistance, energy throughput, temperature, self-discharge rate, and voltage. As time passes, every battery ages and degrades, and as a result, the SOH goes below its initial level. Batteries with poor SOH discharge much faster than "healthier" batteries due to a predictable decline in the rated capacity occurring over time. And SOC measurements can consider battery chemistry, voltage, current, capacity, impedance, charging/discharging rate, and temperature. The SOC shows the amount of electric charge left in the battery, usually expressed as a percentage that ranges from 0% to 100% depending on the charge level. Charging/discharging requirements include voltage, current, and temperature limits, and going beyond these limits may lead to battery damage.

A Battery Management System (BMS) ensures the safe, effective, and ideal operation of batteries by monitoring and controlling SOC and SOH. Understanding the significance of SOC and SOH is essential in the field of battery management. Accurate SOC estimation is one of the main tasks of battery management systems, which will help improve the system performance and reliability, and will also lengthen the lifetime of the battery. In fact, precise SOC estimation of the battery can avoid unpredicted system interruption and prevent the batteries from being over charged and over discharged, which may cause permanent damage to the internal structure of batteries. However, since battery discharge and charge involve complex chemical and physical processes, it is not obvious to estimate the SOC accurately under various operation conditions. Monitoring SOC And SOH entails measuring the battery's voltage, current, and temperature and using the results to determine the SOC and SOH. The SOC is normally calculated by the BMS using the voltage and current that are flowing into and out of the battery. The SOH, on the other hand, is often established based on elements like the quantity of charge/discharge cycles the battery has seen, its age, and its history of temperature.

This disclosure provides various implementations of intelligently charge balancing multiple batteries. Such balancing can be performed using current and SOC with circuits having either i) a unique DC-DC converter connected to each battery; and/or ii) a group of series-connected batteries and those circuits each being connected in parallel. Some implementations can apply current limits to ensure the various components of the design are not exceeding operational capacity and mitigate the risk of system failure. Some implementations involve reducing time periods when there are both positive and negative currents, such as in cases where some batteries are charging and others are discharging. Some implementations include mitigating the impact of faulty or outlier batteries in the balancing scheme by establishing a redundant system that can withstand failure of one of the batteries.

In more detail, batteries connected in parallel may be used in various applications such as hybrid electric vehicles, stationary energy storage systems, or other applications. Individual batteries within a group of batteries connected in parallel may have different voltages for various reasons. For example, a new replacement battery may have a voltage that is different from the other batteries in the group. In another example, some batteries may have been used more or less extensively than other batteries in the group, resulting in different individual battery pack voltages. Connecting batteries with significant voltage differences creates a higher voltage potential; therefore, larger balancing currents are established, flowing from the higher-voltage batteries to the lower-voltage batteries. Higher currents pose a large safety concern for the batteries, their contactors, and/or other equipment or circuitry.

Implementations of principles of the present disclosure can include those that are both physical and nonphysical. For instance, a first physical architecture has each battery circuit with a battery and its own DC-DC converter. Each battery circuit and, thus, battery and associated DC-DC converter is connected in parallel in this manner. There can be a fixed number of battery circuits (i.e., battery-DC-DC converter pairings) in the system. A second physical architecture can have a battery circuit comprising W, X, Y or Z number of batteries connected in series to a single DC-DC converter. Each battery circuit is connected in parallel.

Focusing on nonphysical implementations, an example control logic can be employed. For instance, the control logic can employ charge balancing based on parameters, such as current and SOC, to drive toward averages of the overall system. Some such control logics can apply current limits. SOH could be an additional input to this control logic. Limits can be imposed based on chemistry, capacity, and/or size of the batteries and their temperature. In certain implementations, each battery circuit in the system could charge or discharge at different current levels while converging to the common average SOC of the system. In certain implementations, during normal operation, the system can bias the charge current or discharge current by +/- 10% or less to keep the SOC of all batteries within +/- 5% or less.

Principles of the present disclosure can also be employed in off-nominal conditions. In cases where the system includes batteries with different chemistry, the balancing can favor the SOC input. The control logic can include logic to identify and recognize "faulty" batteries. This aspect can be achieved through existing fault code detection or algorithms to identify outlier conditions (SOC, current, etc.) using known statistical methods of a particular battery in the system when compared to the others. When a faulty or "outlier" battery is identified, its values can be excluded from the average calculation used for SOC, current, and/or other inputs when determining averages to which the system is controlled.

A battery SOH fault may be triggered for a particular battery if it has reached its end of life. SOH will decrease when a battery is being used; therefore, SOH fault can be interpreted as the battery's end of life. It is worth noting, however, that a higher SOH does not mean a battery is faulty. Current limit is set by a control algorithm to prevent a single battery from taking too much current. The control algorithm should prevent the current bias to exceed a certain level (e.g., 20%, 15%, etc.).

Principles of the present disclosure can also be employed to combat energy losses due to simultaneously charging and discharging. Balancing the system by discharging one battery to charge another battery introduces unnecessary energy losses in the system. Ideally, devices, systems, and methods disclosed herein aims to prevent (i) any battery to be charged when the whole system is delivering power and/or (ii) any battery to be discharged when the whole system is receiving power, to improve upon conventional charging and discharging systems and minimize energy losses. At any instance, the system controller will ask the electrical system to deliver power or receive power. When the electrical system should deliver power, each battery should be discharged or do nothing. No battery should be charged. When the electrical system should receive power, each battery should be charged or do nothing. No battery should be discharged.

Notably, principles of the present disclosure are distinguishable from those used for active balancing prior to battery connection. For instance, some known systems utilize bypass switches. In contrast, principles of the present disclosure can be used during operation and thus, do not employ bypass switches. It should be noted that the present disclosure also includes controls for off-nominal conditions such as faults during operation, not pre-connection. For instance, examples disclosed herein can enable mixing new and old batteries, such as when a faulty battery is replaced new, but the older still-functioning batteries do not need to be replaced.

It follows that the present disclosure provides voltage-balancing devices, systems, and methods that use multiple DC-DC converters connected to one or more batteries. In examples, the DC-DC converter is connected to single or multiple batteries to form a battery circuit. An example system can include multiple battery circuits connected in parallel to a common DC bus. Notably, employing principles of the present disclosure can inhibit opportunities to have unused or underused healthy batteries as well as inhibit opportunities to have imbalanced charging/discharging as mentioned elsewhere herein. There can be a battery DC-DC converter that facilitates controlling current flows within a battery circuit to thereby isolate each battery in the battery circuit from the other battery circuits in the system. A larger system can include such a DC-DC converter working in concert with other similar DC-DC converters and optionally known DC-DC converters. For instance, such a system can allocate different discharging power to different battery circuitry to discharge higher-SOC batteries more than lower-SOC batteries until their battery SOCs converge to (or within tolerance of) a system average SOC, thereby preventing excessive currents when the packs are connected to a common DC bus.

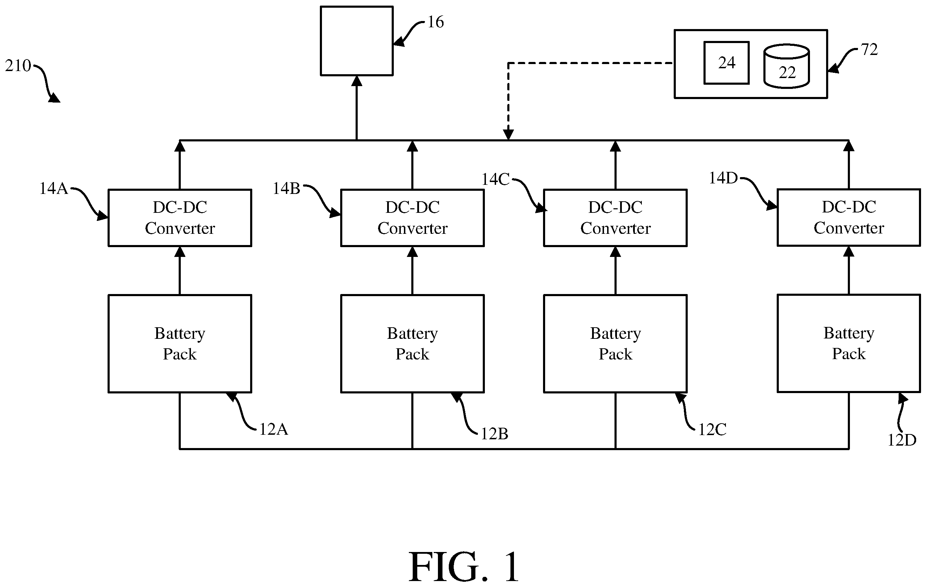

FIGS. 1-8 illustrate representative embodiments and design features of age-balancing devices, systems, and methods that use multiple DC-DC converters connected to one or more batteries.

FIG. 1 shows a schematic diagram of an energy storage system for charge balancing. In this embodiment, an energy storage system 10 according to an example of the present disclosure is shown.

System 10 generally includes a plurality of batteries 12A-12D and their respective plurality of DC-DC converters 14A-14D. Each battery is coupled to a respective DC-DC converter. In other words, a first battery 12A is coupled to a first DC-DC converter 14A, a second battery 12B is coupled to a second DC-DC converter 14B, a third battery 12C is coupled to a third DC-DC converter 14C, and a fourth battery 12D is coupled to a fourth DC-DC converter 14D. Every DC-DC converter 14A-14D is connected to a system DC bus, which is defined as a common electrical point having a specific, discrete voltage level. The system DC bus is connected to a load or source 16 to provide or deliver power to said load or source 16. While four batteries 12A-12D are shown in FIG. 1, it should be understood by those skilled in the arts that more or fewer batteries may be used for different applications without departing from the scope of this disclosure. Batteries 12A-12D may store electrical energy using any of a variety of different rechargeable cell technologies, chemistries, and materials. For example, batteries 12A-12D may employ electrode materials and electrolytes such as lead-acid, nickelcadmium, nickel-metal hydride, lithium-ion, or lithium-ion polymer, to name a few. The load or source 16 represents a system that is powered by the batteries 12A-12D, which may include, but is not limited to, an electric machine, engine, or other type of equipment requiring specific voltage, current, and power ratings.

As noted above, DC-DC converters 14A-14D may be unique and/or any of a variety of suitable DC-DC converters known to those skilled in the art, such as a buck converter or a buck-boost converter. Some example DC-DC converter topologies that may be employed include buck-boost, half-bridge, full-bridge, and modifications thereof. The DC-DC converter can use a battery voltage regulator (BVR) and output current regulator (OCR). The DC-DC converter can be designed to process input DC voltage and generate an output DC voltage with a controlled magnitude and polarity. One method of executing such a design is through the use of pulse-width modulation (PWM). Additionally, the topology can be designed to have an output voltage that is either higher or lower than the input voltage. Some such DC-DC converters can be employed in conjunction with transformers and filtering components, forming an isolated DC-DC converter. An isolated DC-DC converter isolates the input from the output by electrically separating the circuit into two sections, preventing direct current flow between the input and output circuits. Such a configuration is typically achieved by using a transformer, which leverages electromagnetic induction via separate coils of wire (windings) wrapped around a common core to transfer electrical properties (voltage, current, etc.) from a primary to a secondary winding. These configurations offer numerous benefits, including the ability to handle high input voltages and high output currents while inducing minimal stress on the power switches. Additionally, the converter's isolation ensures separate input and output grounds, eliminating the risk of ground loops or short circuits and enhancing safety.

As indicated by dashed lines in FIG. 1, a controller 72 is in communication with batteries 12A-12D and DC-DC converters 14A-14D. In certain examples, the controller 72 may be a battery management unit (BMU) or other similar device or system. The controller 72 may include a non-transitory memory 22 that can be computer readable. The memory can have instructions that, in response to execution by a processor 24, cause controller 72 to determine battery parameters for determining SOC and/or SOH of the batteries 12A-12D, control current flow through the system 10, and/or control the operation of DC-DC converters 14A-14D in the manner described herein. Current flow is what is controlled in the end based on system parameters (or system data), including SOC, SOH, battery chemistry, temperature, current limits, and the like.

Processor 24, non-transitory memory 22, and controller 72 are not particularly limited and can, for example, be physically separate. In certain examples, controller 72 can form a portion of a processing subsystem, including one or more computing devices having memory, processing, and communication hardware. Controller 72 can be a single device or a distributed device, and functions of controller 72 can be performed by hardware and/or as computer instructions on a non-transient computer readable storage medium, such as non-transitory memory 22.

In certain examples, controller 72 includes one or more interpreters, determiners, evaluators, regulators, and/or processors 56 that functionally execute the operations of controller 72. The description herein including interpreters, determiners, evaluators, regulators, and/or processors emphasizes the structural independence of certain aspects of controller 72 and illustrates one grouping of operations and responsibilities of controller 72. Other groupings that execute similar overall operations are understood to be within the scope of the present disclosure. Interpreters, determiners, evaluators, regulators, and processors can be implemented in hardware and/or as computer instructions on a non-transient computer readable storage medium and can be distributed across various hardware or computer-based components.

Example and non-limiting implementation elements that functionally execute the operations of controller 72 include: sensors providing any predetermined value; sensors providing any value that is a precursor to a predetermined value; datalink and/or network hardware including communication chips, oscillating crystals, communication links, cables, twisted pair wiring, coaxial wiring, shielded wiring, transmitters, receivers, and/or transceivers; hard-wired logic circuits; reconfigurable logic circuits in a particular non-transient state configured according to a module specification; any actuator including at least an electrical, hydraulic, or pneumatic actuator; a solenoid; an operational amplifier; analog control elements (springs, filters, integrators, adders, dividers, gain elements, etc.); circuitry, and/or digital control elements.

Certain operations described herein include operations to interpret and/or to determine one or more parameters or data structures. Interpreting or determining, as utilized herein, include receiving values by any method known in the art, including at least receiving values from a datalink or network communication, receiving an electronic signal (e.g. a voltage, frequency, current, or PWM signal) indicative of the value, receiving a computer generated parameter indicative of the value, reading the value from a memory location on a non-transient computer readable storage medium, receiving the value as a run-time parameter by any means known in the art, receiving a value by which the interpreted parameter can be calculated, and/or by referencing a default value that is interpreted to be the parameter value.

With continued reference to FIG. 1, in one exemplary control method for system 10, controller 72 performs various operations that are described in more detail below. In examples, controller 72 determines the battery parameters of batteries 12A-12D and commands DC-DC converters 14A-14D to control the amount of current flowing into, and out of, batteries 12A-12D. Controller 72 can distribute the current among batteries 12A-12D in such a way that the SOC of all batteries are getting closer to each other.

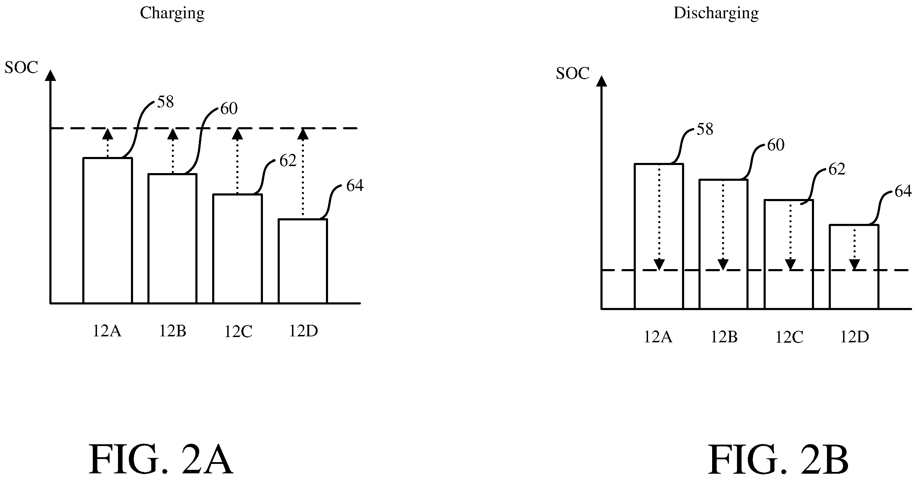

An example of the manner in which the SOCs of batteries 12A-12D change during operation of the above-described control method is depicted in FIGS. 2A-2B. FIG 2A depicts a charging event. In this example, battery 12A is ranked by controller 72 as having the highest SOC 58, battery 12B is ranked as having a SOC 60 less than that of battery 12A, battery 12C is ranked as having a SOC 62 less than that of battery 12B, and battery 12D is ranked as having the lowest SOC 64. When the electrical system is commanded to receive power, DC-DC converters 14A-14D will be operated to charge batteries 12A-12D. Controller 72 will distribute the charging current in such a way that battery 12D gets the maximum charging current, followed in order by batteries 12C, 12B, and 12A. Thus, the SOC of battery 12D will increase the fastest, followed in order by batteries 12C, 12B, and 12A. After the charging event, due to such a distribution of charging current, the SOC of all batteries will converge to a specific value.

Similarly, FIG 2B depicts a discharging event. In this example, battery 12A is ranked by controller 72 as having the highest SOC 58, battery 12B is ranked as having a SOC 60 less than that of battery 12A, battery 12C is ranked as having a SOC 62 less than that of battery 12B, and battery 12D is ranked as having the lowest SOC 64. When the electrical system is commanded to deliver power, DC-DC converters 14A-14D will be operated to discharge batteries 12A-12D. Controller 72 will distribute the discharging current in such a way that battery 12A delivers the maximum discharging current, followed in order by batteries 12B, 12C, and 12D. Thus, the SOC of battery 12A will decrease the fastest, followed in order by batteries 12B, 12C, and 12D. After the discharging event, the SOC of all batteries will converge to a specific value.

While the examples shown in FIG. 2A and 2B are for SOC, there are similar balancing considerations as it relates to other parameters such as current and SOH. Notably, SOH can only decrease, so FIG. 2B will be most applicable for that application. Low SOH would indicate to the system to use less current in both directions. This example, however, is just one of many examples disclosed herein and should not be construed as limiting the scope of this disclosure.

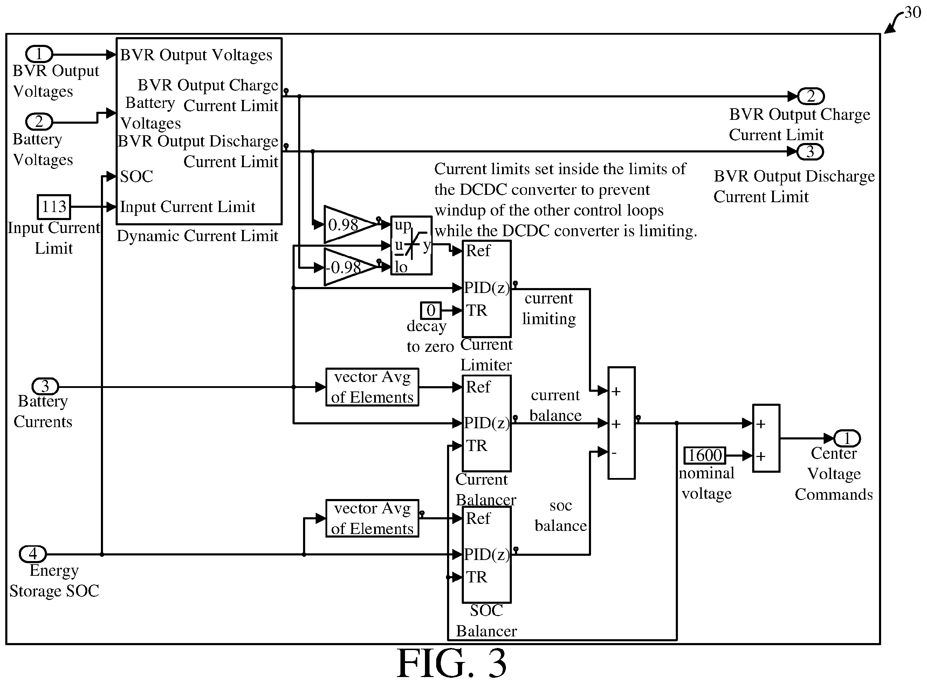

FIG. 3 shows an example control logic 30 for implementing principles of the present disclosure. In the illustrated example, the control logic 30 is for a system that is charge balancing based on current and SOC. The system can be similar to those discussed in relation to FIGS. 1 and 2. The battery system controller used in this system can be illustrated here in FIG. 3. It has a dynamic current limit that uses input parameters including output voltages of the DC-DC converter, battery voltages, energy storage SOC, and input current limits. The output of the dynamic current limit is output charge and discharge limits of the DC-DC converter. Note that current limits are set inside the outputted limits of the dynamic current limit to prevent windup of other control loops while the DC-DC converter is limiting. Charge balancing with this system drives these parameters toward the average of the overall system, while applying current limits. This is illustrated by the Current Limiter, Current Balancer, and SOC Balancer. The control logic 30 can use the nominal voltage -- defined as the voltage value of electrical equipment for which it is designed -- and the output voltage such as that from a transformer to determine voltage demands for controlling the system.

The aforementioned control logic 30 is just one of many examples that one skilled in the art will recognize based on the full scope of this disclosure. Another example control logic 30 can use SOH as an additional input. In this example, limits or maximum values related to chemistry of the batteries, capacities of the batteries, size of the batteries, and temperature can be imposed. Each battery circuit in the system can charge or discharge at different current levels while converging to the common average SOC of the system. In general, during normal operation, the system can bias the charge current or discharge current by +/- 10% or less to keep the SOC of all batteries within +/- 5% or less. These are just some examples of the many examples disclosed herein.

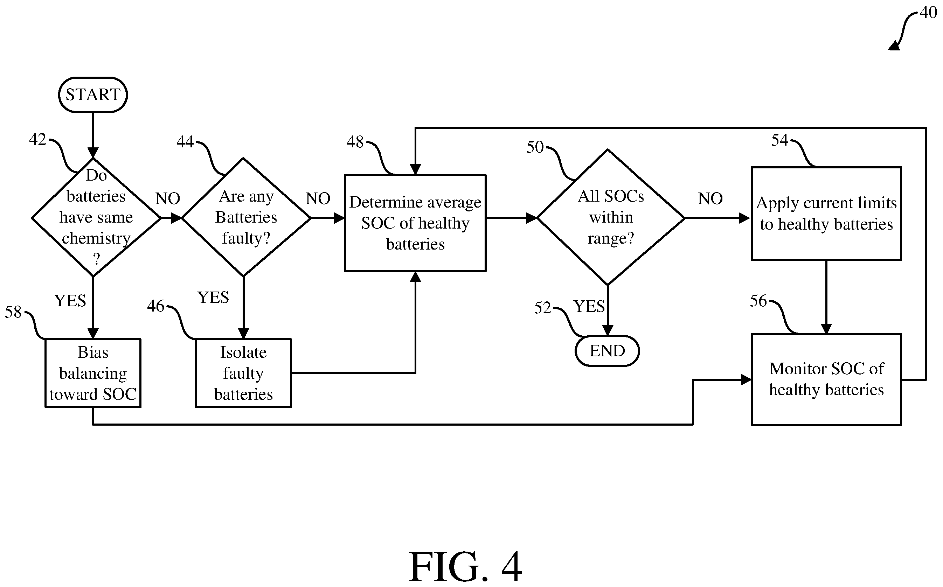

The principles shown in FIG. 3 are translated into a flowchart in FIG. 4, which illustrates a method 40 for operating a system to perform current balancing in off-nominal conditions, according to principles of the present disclosure. Some examples of the method 40 will be performed by the controller 72, which may be implemented into system 10. Method 40 begins by determining if there are different batteries in the system, as shown in Step 42. If there are no different chemistries in the system, method 40 proceeds to determine if any batteries are faulty (Step 44). If any batteries are faulty, any faulty batteries are isolated (Step 46). For instance, DC-DC converters 14A-14D can inhibit current flow into or out of the faulty batteries to effectively isolate the faulty batteries. If no faulty batteries are identified, or after all the faulty batteries are isolated, method 40 proceeds to determine the average SOC of the healthy batteries (Step 48). For instance, the average of the SOC of batteries 12A-12D is determined.

A fault can occur in many ways; thus, it is too narrow to interpret the scope of the present disclosure to mean that a fault is based on at least one parameter of system data. Indeed, a battery fault can be diagnosed by a battery management system, for example. It is sufficient for systems and methods disclosed herein to know that a battery is determined to be faulty (by whatever means) and control logic will then exclude that battery. For a battery that is having a quite different state of charge (or other parameter), the control logic can still keep it operating and the control logic will gradually bring it to the average.

After determining the average SOC of all of the healthy batteries (Step 48), it is determined whether the SOCs of each battery are within range of the average (Step 50). For instance, it is determined whether batteries 12A-12D have a SOC difference between each battery pack and the average that is sufficiently small. If the SOCs of batteries 12A-12D vary only by a sufficiently small amount, then no balancing is needed and the method 40 is terminated (Step 52). If it is determined instead that any of the SOCs of batteries 12A-12D are different by more than a sufficiently small amount, then the method 40 proceeds to Step 54.

Step 54 includes applying current limits to healthy batteries. For instance, controller 72 identifies the batteries 12A-12D having the highest SOC and the batteries 12A-12D having the lowest SOC. In an effort to minimize system losses, controller 72 may only charge/discharge from high SOC batteries until their SOC reaches that of the minimum SOC. The controller 72 monitors the SOCs of batteries 12A-12D as they change (step 56), and control method 40repeats Steps 48-56 until all SOCs are within range of the system (Step 50), and the method 40 ends (Step 52).

At Step 42, it is determined whether or not different chemistries (batteries) are present in the system. If it was determined that there are different batteries present, then the balancing prioritizes SOC rather than SOH (Step 48). Then, the SOC of all the healthy batteries are monitored (step 56). From there, the method 40 continues as previously discussed.

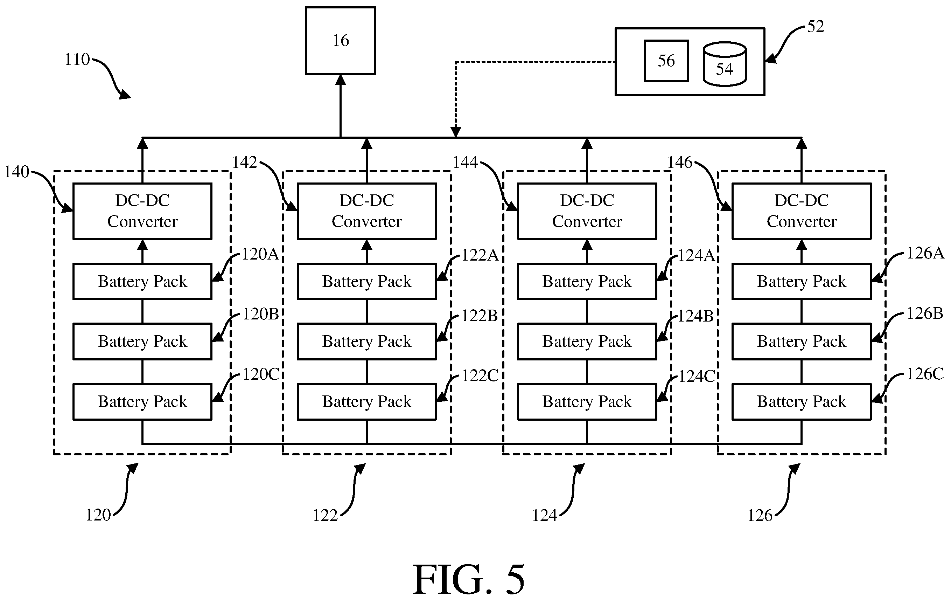

Referring now to FIG. 5, another example of an energy storage system according to the present disclosure is shown. System 110 is similar in various aspects to system 10 of FIG. 1; however, system 110 generally includes four battery circuits 120, 122, 124, 126 of batteries, each battery circuit comprising three batteries. Battery circuit 120 includes batteries 120A-120C, battery circuit 122 includes 122A-122C, battery circuit 124 includes 124A-124C, and battery circuit 126 includes 126A-126C. Each battery circuit 120, 122, 124, 126 is coupled to DC-DC converters 140, 142, 144, 146, which in turn are operatively coupled to load 16. Battery circuit 120 is coupled to DC-DC converter 140, battery circuit 122 is coupled to DC-DC converter 142, battery circuit 124 is coupled to DC-DC converter 144, battery circuit 126 is coupled to DC-DC converter 146. Again, while four DC-DC converters are shown coupled to four battery circuits each having three batteries, it should be understood that more or fewer DC-DC converters, battery circuits, and/or batteries may be used for different applications. DC-DC converters 140-146 may be any of a variety of suitable DC-DC converters known to those skilled in the art such as buck converters or buck-boost converters.

Referring back to FIG. 4, Steps 48-58 show several aspects considered when balancing current in the system. For instance, if there are four battery circuits 120, 122, 124, 126 and 100 amperes are needed in total, balancing among the circuits120, 122, 124, 126 in Step 48 would encourage the system to provide 25 amps from each of the four battery circuits 120, 122, 124, 126. Step 50 encourages the system to balance SOC such that more current can be distributed to a battery with higher SOC at the moment. If a battery has much lower SOH than other batteries, less current can be distributed to that battery (Step 52). If a battery is degraded but not totally faulty, the current can be reduced (Steps 48-56). When the battery becomes faulty, it can be isolated from the battery system (Step 46). If a battery has higher temperature then other batteries, less current can be distributed to that battery (Step 54).

Based on the SOC, temperature, and age of each battery circuit, there are current limits at Step 56. Battery chemistry can be considered under or in addition to current limits at Step 58. Because of the battery chemistry (e.g., some suitable for high power, some suited for high energy, etc.), all these elements can be considered together ahead of Step 60. While addition signs are shown, this is merely an example as more complex weighting and equations can be used. For instance, balancing current (Step 48) and SOC (Step 50) may have higher weighting factors than others. These two factors present a tradeoff however, as, for example, current becomes unbalanced as the system seeks to balance SOC. All these operations can occur while current limits are respected by the system. However, they do not all need to be imposed at the same time. For instance, weighting and balancing can be range dependent such that when in a certain range, the system prioritizing balancing current, in another range the system prioritizes balancing SOC, and in yet another range the system has a combined balancing between current and SOC. There can be an arbitration object that achieves the right demands in a given application, as will be shown in Example 5.

Returning to FIG. 5, a controller 72 is in communication with battery circuits 120, 122, 124, 126, battery packs120A-D, 122A-D, 124A-D, 126A-D, and DC-DC converters 140, 142, 144, 146, as indicated by the dashed lines. In certain examples, controller 72 may be a battery management unit (BMU) or other similar device or system, and may include a non-transitory memory 22 having instructions that, in response to execution by a processor 24, cause controller 72 to determine voltages of battery circuits 120, 122, 124, 126 and control the operation of DC-DC converters 140, 142, 144, 146 in the manner described herein. Various alternatives, aspects and functions of processor 24, non-transitory memory 22, and controller 72 in system 110 are the same or similar to those described above with reference to FIG. 1 and are not repeated here.

In one exemplary control method for system 10, controller 72 performs various operations that are described in more detail below. In general, controller 72 determines the voltages of battery circuits 120, 122, 124, 126 and ranks the voltages in order of highest to lowest or lowest to highest. Controller 72 then commands DC-DC converters 140, 142, 144, 146 to control the amount of current flowing into battery circuits 120, 122, 124, 126. Because the batteries 120A-D, 122A-D, 124A-D, 126A-D are connected in series, the current is the same for all battery packs. In known architectures, multiple battery packs connect to the same DC-link in normal operation. Each battery pack has a simple DC-DC converter. The simple DC-DC converters are used to balance the voltage of all battery packs before they are connected to the same DC-link. After the battery packs are connected to the DC-link, the DC-DC converters are bypassed and never used in normal operation. In the present disclosure, however, each battery is connected to a sophisticated DC-DC converter because the common DC-link is at a much higher voltage than any battery pack. The sophisticated DC-DC converter is used to step-up the battery voltage to the level of the DC-link. The DC-DC is always in operation. Unlike the known architectures, principles of the present disclosure may not connect any battery pack directly to the common DC-link.

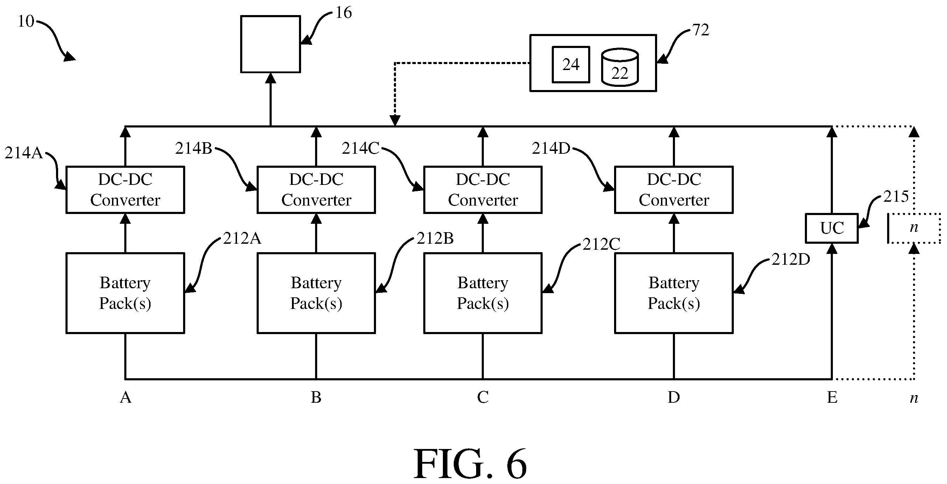

FIG. 6 shows a schematic diagram of an energy storage system 210. This system is similar to the other systems (system 10 and system 110) disclosed previously herein. In this embodiment, system 210 includes a plurality of battery circuits (A, B, C, D) connected to a DC bus. Each of these battery circuits A-D has a dedicated DC-DC Converter (214A-214D, respectively) connected in series with one or more battery packs (212A-212D, respectively). Each DC-DC converter 214A-214D is coupled to a system DC bus, which is in turn connected to a load or source 16. A controller 72, with connected memory 22 and processor 24, is in communication with batteries 212A-212D and DC-DC converters 214A-214D. The memory can have instructions that, in response to execution by a processor 24, cause controller 72 to determine battery parameters for determining SOC and/or SOH of the batteries 212A-212D, control current flow through the system 10, and/or control the operation of DC-DC converters 214A-214D in the manners described herein. Distinguishing features of system 210 in FIG. 6 when compared to those discussed elsewhere herein include additional circuits without a battery. Namely, the illustrated system 210 includes an ultracapacitor circuit E connected in parallel to the plurality of battery circuits (A-D) and integrated into the system 210 in a manner similar to the plurality of battery circuit. For illustration purposes, a miscellaneous circuit n is shown to indicate that other circuits (e.g., battery, ultracapacitor, etc.) can be added to the system 210 at box "n". The system 210 can shuttle charge to and from the ultracapacitor circuit E as required for sudden discharge events and/or sudden charge events. In both events, the system 210 can isolate any battery circuit (A-D) in the system 210 to shuttle charge to or from the ultracapacitor 215. For a sudden discharge event, the system 210 can shuttle charge to the ultracapacitor(s) 215 for storage. For a sudden charge event, the system 210 can shuttle charge from the ultracapacitor(s) 215 to a high-power storage circuit. A DC-DC converter can be provided with the ultracapacitor. As more energy is drawn from the ultracapacitor, the voltage decreases more. Having a DC-DC converter allows the system to step-up the voltage to equal to that of the common bus.

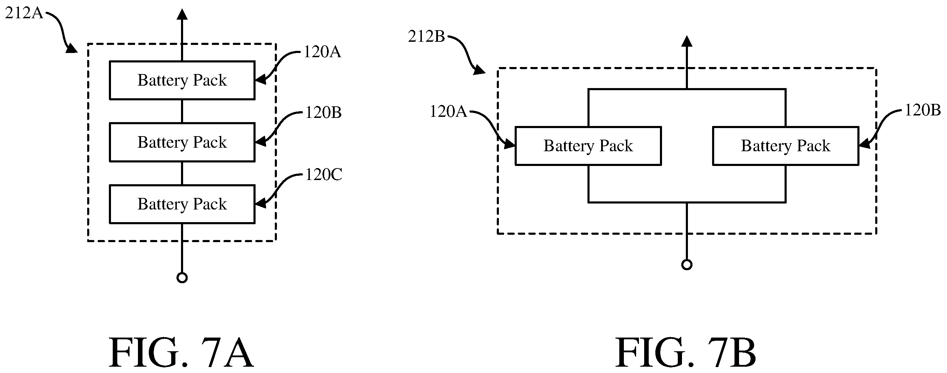

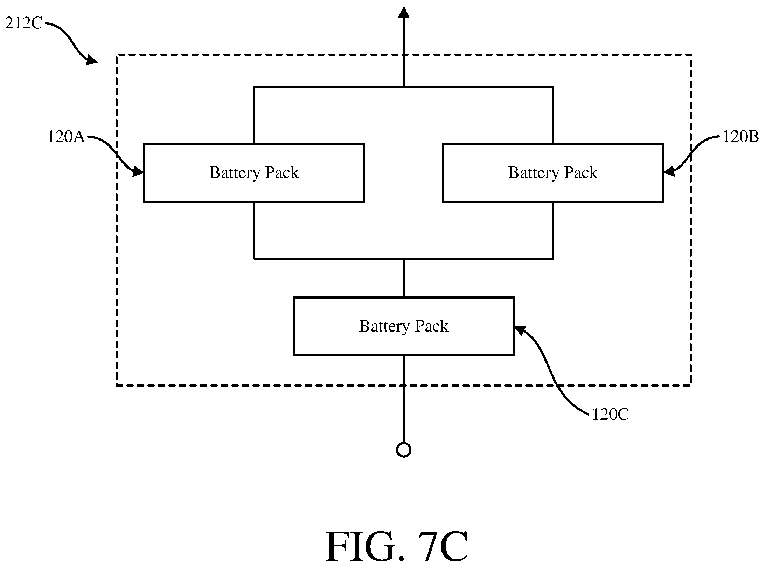

Each battery pack 212A-212D may include a plurality of interconnected battery packs comprising different combinations of connections and number of batteries, as shown in FIGS. 7A-7C. For example, in FIG. 7A, the battery pack 212A comprises multiple battery packs 120A-120C connected in series. In FIG. 7B, the battery pack 212B comprises battery packs 120A-120B connected in parallel. In FIG. 7C, the battery pack 212C comprises battery packs 120A-120C having a combination of parallel and series connections. It should be understood, however, that the number of batteries, as well as the combination of specific parallel and series connections, may vary without escaping the scope of the disclosure to comply with the output requirements for the battery pack (e.g., battery capacity, voltage, internal resistance, power output, etc.).

The disclosed control logic facilitates charge balancing across multiple parallel-connected battery branches, enabling the system to maintain performance even when individual branches exhibit degraded behavior or varying characteristics. In this context, balancing is defined in terms of state of charge (SOC), with the system actively working to keep each branch's SOC within a defined range of the system-wide average. This prevents any single branch with a low SOC from becoming a bottleneck or source of inefficiency, thereby supporting overall system reliability and responsiveness.

### System Tuning and Converter Impact

The specific behavior of the balancing logic can be tuned based on the capabilities of the DC-DC converters used within the system. Higher-end converters-e.g., those with finer control granularity, faster switching performance, or broader operating envelopes-permit greater flexibility in how the system manages current flow and balancing behavior. Such converters allow the control logic to respond more precisely to deviations in SOC or other battery parameters. Conversely, simpler or lower-performance converters may require tighter constraints on acceptable imbalances, limiting the system's ability to defer balancing under transient or minor deviations.

### Patentability Framing - Multi-Branch Advantage

The disclosed architecture offers a distinct advantage in terms of redundancy and operational resilience. While incorporating multiple converters-e.g., one per branch-can increase system cost compared to conventional designs that use a single converter or only a couple of battery branches without balancing, it delivers substantial improvements in survivability. For example, in configurations with five parallel battery branches, the system can tolerate the complete failure or isolation of one branch (20% of the system) and continue operating effectively. This level of tolerance is especially valuable in mission-critical or maintenance-intensive environments and represents a meaningful differentiator over more rigid or centralized topologies.

### Granular Balancing Embodiments

In some embodiments, the system may implement balancing at more granular levels-e.g., within battery strings or even among individual cells. This is particularly beneficial in applications where cells or modules with different characteristics (e.g., age, chemistry, manufacturer) are used within the same system. The control logic can monitor individual cell SOC and apply tailored current adjustments to drive convergence toward uniformity, even when the cells are not identical. Such fine-grained balancing improves overall system capacity, protects weaker cells from overstress, and extends battery life.

Together, these capabilities underscore the flexibility, robustness, and adaptability of the disclosed architecture. By intelligently managing SOC balancing across multiple branches and at various levels of system granularity, and by leveraging higher-end converter features where available, the system can outperform conventional designs under a wider range of real-world conditions.

In the context of the disclosed battery system, the term interface may refer to the functional unit within each battery circuit that manages and regulates the interaction between one or more batteries and the overall system. This interface plays a key role in enabling intelligent current distribution, charge balancing, and operational independence for each battery circuit. The specific composition of the interface can vary based on system design and performance objectives.

In many implementations, the interface may include a DC-DC converter. This component is typically responsible for adjusting voltage levels-either stepping them up or down-so that the batteries can properly connect to a common DC bus regardless of individual battery voltages. The DC-DC converter may also regulate current flow into and out of the battery, ensuring that charging and discharging occur within safe and efficient operating limits. The converter can be a non-isolated or isolated type, depending on the application's safety, performance, and electrical isolation requirements.

In some configurations, the interface may also incorporate a master or internal controller, such as a battery management unit (BMU) or similar control logic. This controller may receive system data (e.g., state of charge, state of health, temperature, or chemistry) and make real-time decisions about how to allocate current across the system. It may work in coordination with other controllers to prevent overcharging or over-discharging and to isolate faulty or degraded batteries from operation. These control elements, when included, enhance the flexibility and reliability of the energy storage system by enabling per-circuit autonomy and adaptive management.

These examples illustrate some of the ways the interface may be implemented within a battery circuit, but the term is not limited to any one configuration. Depending on the specific architecture and design goals, the interface may include additional components or omit certain elements altogether. The system is designed to be adaptable, and the interface may evolve based on application needs, battery types, or performance requirements. These are some of many possible implementations, and the term interface is intended to be interpreted in a flexible manner consistent with the broader principles described throughout the disclosure.

In the context of the disclosed battery system, the term intelligently may refer to a control strategy or behavior that is informed by real-time system data and designed to achieve optimized performance across a variety of conditions. This includes, but is not limited to, making decisions about current distribution, charge balancing, battery isolation, and overall system operation in a way that accounts for key parameters such as state of charge (SOC), state of health (SOH), temperature, current limits, and battery chemistry.

For example, a system may intelligently adjust the amount of current delivered to each battery circuit to ensure that all batteries remain within a desired SOC range or converge toward a system-wide SOC average. In other scenarios, the system may reduce current to batteries showing signs of degradation, or temporarily isolate faulty batteries to maintain stability and avoid compromising system reliability. These decisions may be based on pre-defined rules, dynamic algorithms, or responsive control logic designed to minimize energy losses, extend battery lifespan, and adapt to changing load demands.

In some implementations, intelligent behavior may be facilitated by a dedicated controller or battery management unit (BMU) that processes input signals from multiple battery circuits and uses control algorithms to make system-wide adjustments. These adjustments may include dynamic current limits, fault detection and response, or charge/discharge biasing based on battery condition or chemistry. However, intelligent control does not necessarily require complex algorithms or centralized control-it may also include simpler rule-based actions that nonetheless contribute to improved system function.

These are just some of the ways in which the term intelligently may be applied in the context of the system. The term is used broadly to describe behavior that is responsive, adaptive, and guided by relevant operational data. It is not limited to any one specific form of artificial intelligence, algorithm, or level of complexity, and may encompass a wide range of practical implementations depending on the design and performance goals of the energy storage system.

### Fine-Grained SOC-Based Current Balancing with DC-DC Converters

In certain implementations, a battery system may include multiple battery cells or modules. Imbalances in the state of charge (SOC) among these cells or modules may result in one unit reaching a charge or discharge limit prior to others, thereby limiting overall system performance. Fine-grained current balancing may address such imbalances by actively redistributing energy between cells or battery modules so that their respective SOCs converge within a desired threshold. DC-DC converters may serve as enabling components for such active balancing. Unlike passive balancing approaches, in which excess charge is dissipated as heat, a DC-DC converter may transfer energy from a higher-SOC unit to a lower-SOC unit, thereby facilitating charge equalization.

The level of sophistication of the DC-DC converter implementation may influence the precision and responsiveness with which SOC-based balancing can be achieved under dynamic operating conditions. High-performance DC-DC converters may incorporate features that enable real-time regulation of balancing current based on SOC parameters. In certain implementations, such converters may function as intelligent energy routing devices, facilitating bidirectional energy transfer, voltage matching, and current coordination across multiple battery modules.

In some examples, a high-performance DC-DC converter may support a wide input/output voltage range. Such capability allows the converter to accommodate a full SOC swing, enabling energy transfer even between modules with significantly different voltages. For instance, a converter configured to perform both buck and boost operations may regulate voltage under both charging and discharging conditions.

Certain DC-DC converters may also exhibit fast transient response, enabling rapid adjustment of output current in response to system data indicative of SOC divergence or load fluctuation. For example, if a battery module begins to deplete more rapidly than others, the converter may immediately reallocate current to maintain charge balance and prevent over-discharge. This capability may be particularly advantageous in mobile systems where acceleration, regenerative braking, and transient loads are common.

In some embodiments, the DC-DC converter may support bidirectional power flow. Bidirectionality permits the converter to either extract energy from or deliver energy to a given battery module. This enables charge to be pushed into low-SOC modules and pulled from high-SOC modules as needed. A converter lacking bidirectional functionality may be limited to one-way regulation, thereby restricting its ability to rebalance the system during both charge and discharge events.

Additional converter features may include programmable current limits and digitally adjustable current control. These features allow the system to tune balancing currents with fine resolution, enabling controlled convergence of SOC values across the battery system. For instance, a battery management system (BMS) may command the converter to deliver a specific balancing current to a lower-SOC module until equilibrium is reached. Further, control logic may taper the current as convergence is approached, reducing stress on individual cells.

Some DC-DC converter topologies may include galvanic isolation between input and output stages. Isolation may be required when battery modules are arranged in series strings or referenced to distinct ground potentials. Isolated converters can support energy transfer between otherwise electrically incompatible circuits, providing enhanced flexibility in system architecture.

High-performance DC-DC converters may further include embedded control logic, such as a microcontroller or digital signal processor (DSP). These embedded controllers may execute local control algorithms that respond to measured parameters, such as module voltage, current, or SOC. In certain configurations, converters may also include communication interfaces that facilitate coordination with a central BMS or supervisory controller via protocols such as CAN.

By contrast, basic DC-DC converter designs lacking one or more of the foregoing features may provide limited support for SOC-based balancing. For example, a non-isolated unidirectional buck converter may be able to reduce voltage from a high-SOC module to a load but may not be capable of boosting voltage or performing bidirectional regulation. Such converters may operate across a narrow voltage window, provide fixed or limited control behavior, and lack responsiveness to real-time SOC data. In general, systems relying solely on such converters may be unable to perform dynamic redistribution of energy among modules, and any balancing that occurs may be coarse, delayed, or restricted to charge-only scenarios.

Accordingly, systems utilizing high-performance DC-DC converters may be capable of fine-grained SOC balancing, allowing modules with varied capacities, chemistries, or states of health to operate in parallel while maintaining system-level efficiency and stability. This enables coordinated use of heterogeneous batteries and supports applications in which charge regulation, balancing responsiveness, and converter flexibility are critical.

### Energy Storage System (EMS) Overview and Integration

In accordance with various implementations, the energy storage system 210, otherwise known as an "energy management system" (EMS) disclosed herein comprises a network of battery circuits, DC-DC power converters, and controller interfaces arranged to manage energy flow in both mobile and stationary power applications. The EMS 210 may be implemented using a centralized control architecture, a distributed control architecture, or a hybrid thereof. In a centralized implementation, a master controller supervises all battery circuits and regulates current flow based on system-level data. In a distributed implementation, each battery circuit may include or be paired with a local controller that monitors operational parameters and communicates with other controllers in the system. The distributed implementation may provide improved fault tolerance and system scalability, enabling continued operation despite failure in any single circuit and allowing additional battery circuits to be integrated with minimal reconfiguration.

Each battery circuit may include one or more electrochemical storage elements (e.g., battery cells or modules) and may be operatively coupled to a common DC bus via a bidirectional DC-DC converter. This arrangement enables the EMS 210 to independently regulate charging and discharging activity for each battery circuit, thereby facilitating system-wide control and optimization. In various embodiments, controller interfaces may include wired or wireless communication links and are configured to exchange control signals and measurement data with other system components, including vehicle control units and/or grid-connected controllers.

### Application Environments and Use Cases for Energy storage system

The energy management system (EMS) disclosed herein may be implemented as part of or in conjunction with an integrated power system. As used herein, an "integrated power system" may refer to a system comprising one or more of: generator sets, alternators, switchgear, load control devices, energy storage systems, microgrid controls, power electronics, or combinations thereof. Such integrated power systems may be configured to operate in various modes, including prime power, standby power, cogeneration, or as grid-connected or islanded microgrids.

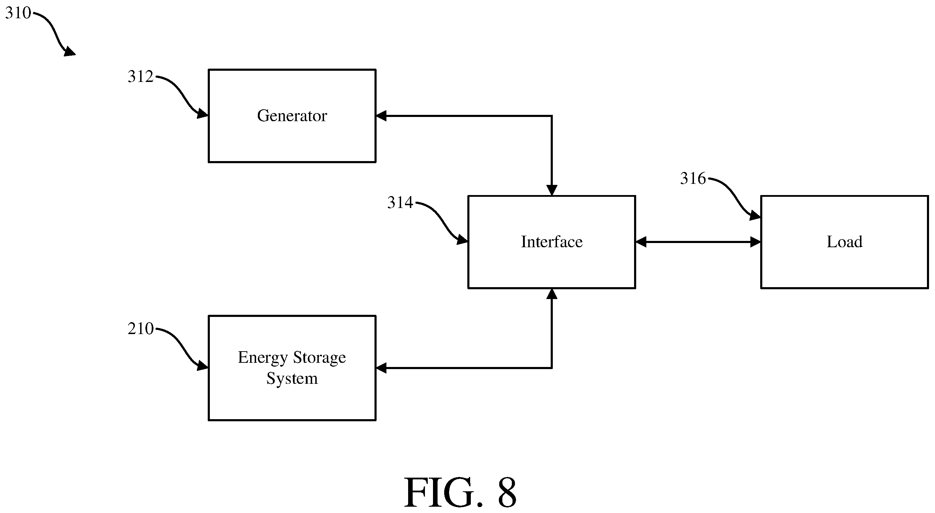

FIG. 8 is a flowchart of an exemplary integrated power system 310 comprising of an energy storage system (EMS) 210, generator 312, and interface 314 that provides energy to a load 316. As shown, the EMS 210 may be incorporated into integrated power systems 310 deployed across a range of application environments or loads 316. These include, but are not limited to, residential buildings, commercial facilities, industrial installations, healthcare institutions, data centers, mining operations, oil and gas platforms, telecommunications infrastructure, maritime systems, and rail support systems. In each of these settings, the EMS 210 may be used to monitor and control energy storage assets, manage current balancing, coordinate transitions between power sources, and support uninterrupted or optimized energy delivery.

In commercial or industrial deployments, an integrated power system 310 may include high-horsepower generator sets 312 and modular battery circuits governed by the EMS. In such configurations, the EMS 210 may provide load support during peak demand, facilitate dynamic current redistribution across battery circuits, or assist with generator ramping and load transfers. The EMS 210 may also coordinate with switchgear or supervisory controllers that manage facility-wide protection, load shedding, or energy prioritization.

In backup or standby applications, the EMS 210 may manage charging and discharging of batteries integrated within an overall power system that is otherwise supported by generator assets. The EMS 210 may respond to utility outages by immediately supplying critical loads using stored battery energy, and may maintain this support until a generator 312 achieves synchronization. Upon generator readiness, the EMS 210 may transition energy delivery without introducing voltage transients or service interruption. Similarly, during return to grid power or generator shutdown, the EMS 210 may re-assume load support and manage recharging of battery circuits.

In micro grid environments, an integrated power system 310 may incorporate multiple distributed generation sources 312 such as solar photovoltaic panels, wind turbines, and engine-driven generators. The EMS 210 may be configured to coordinate energy dispatch across these sources and regulate current flow among multiple battery circuits. It may maintain DC or AC bus stability, support grid-following or grid-forming behavior, and manage load sharing using centralized or decentralized strategies (e.g., droop control). The EMS 210 may further balance the system across heterogeneous battery modules and enable energy time-shifting, peak shaving, or spinning reserve functions.

In mobile and transportation-adjacent applications, such as marine power systems or rail support platforms, the EMS 210 may be embedded within integrated power systems 310 that include onboard generation and modular energy storage. In these cases, the EMS 210 may coordinate hybrid energy use, manage transient load events, or isolate faulty modules while maintaining power delivery.

The EMS 210 may be implemented using scalable controller hardware and DC-DC power converters. Centralized EMS 210 configurations may include a master controller or interface 314 that collects system data from all battery circuits and manages balancing logic across the entire installation. Distributed EMS configurations may utilize per-module controllers capable of autonomous operation with coordination over a wired or wireless communication link. The EMS may also interface with site supervisory control and data acquisition (SCADA) systems, remote diagnostics tools, or cloud-based fleet management platforms.

Accordingly, the EMS 210 disclosed herein may be integrated into a wide range of stationary and mobile integrated power systems 310. Its modular architecture, support for diverse battery technologies, real-time control functions, and fault-tolerant design enable it to provide energy balancing, system protection, and coordinated energy dispatch in demanding environments.

### EMS Integration in Electrified Vehicle Powertrains

In vehicle applications, the EMS may be integrated to manage energy exchange between a traction battery pack, one or more electric drive units, and vehicle accessories. The traction battery pack is typically coupled to the vehicle propulsion system via a high-voltage DC link and an inverter that drives an electric motor. The EMS may govern power delivery from the battery to the inverter during propulsion, and regulate energy recovery during regenerative braking. For example, during a deceleration event, the EMS may command the DC-DC converter or inverter to limit charging current within a safe threshold, even while the motor operates in a generating mode.

The EMS may also interface with one or more auxiliary DC-DC converters that regulate voltage between the high-voltage traction battery and a low-voltage (e.g., 12 V) subsystem. These converters supply power to auxiliary components and may also be configured to maintain the charge of a lead-acid or lithium-based auxiliary battery, thereby eliminating the need for an alternator in electric vehicles.

In some embodiments, the EMS is configured to coordinate multiple battery circuits within the vehicle. For example, if the vehicle includes both high-power and high-energy storage modules, the EMS may allocate energy delivery duties based on module capability. A high-power module may be prioritized during acceleration events, while a high-energy module may be used for sustained cruising. The EMS may also adapt to differences in state of health (SOH), chemistry, or capacity between modules, adjusting charge and discharge rates accordingly to prolong module life and optimize performance.

The EMS may further include safety and fault mitigation features. In the event of an over-voltage or over-temperature condition, the EMS may isolate the affected module by opening a contactor or disabling the associated DC-DC converter. Vehicle operation may continue in a derated or limited-power mode using the remaining functional modules.

The EMS may communicate with the broader vehicle network (e.g., via a CAN bus or similar protocol) and is operable to receive commands (e.g., torque demand) and report diagnostics (e.g., SOC, SOH, fault status). The EMS may further interface with AC or DC charging infrastructure, managing charge rates based on internal and external conditions, and coordinating transitions between different power modes. In total, the EMS enables dynamic, safe, and efficient energy management across the electrified vehicle powertrain.

### EMS Integration in Stationary Energy Storage Systems

In stationary applications, the EMS may be deployed in systems including, but not limited to, generator-assisted energy storage units, microgrids, uninterrupted power supply (UPS) systems, and hybrid energy systems configured for prime or standby power. In such systems, each battery circuit may be connected to a common DC bus via a respective bidirectional DC-DC converter. This enables independent regulation of each battery circuit and supports scalable system design.

The EMS may regulate the overall bus voltage and manage energy distribution between sources and loads. In some configurations, the DC bus may also interface with renewable energy generators (e.g., photovoltaic or wind-based systems) and power inverters that feed AC loads or synchronize with the utility grid. The EMS may monitor real-time operating conditions, such as voltage, current, SOC, SOH, and temperature, and may adjust charging and discharging rates to optimize performance and protect individual battery circuits.

In grid-connected systems, the EMS may interface with bidirectional inverters to export or absorb energy in coordination with grid events or utility commands. The EMS may also support ancillary services such as frequency regulation, demand response, or peak shaving.

In systems where a generator is present, the EMS may balance generator output with battery contribution. For example, during low-load periods, the EMS may prioritize charging; during high-demand events, it may limit generator ramping by discharging stored energy. In standby configurations, the EMS may deliver instantaneous power to critical loads during a utility outage, bridging the gap until a generator comes online. The EMS may also manage seamless transitions during generator start-up, grid reconnection, or shutdown conditions.

In islanded microgrids, the EMS may cooperate with a microgrid supervisory controller or operate autonomously to maintain bus stability, frequency, and voltage targets. Using local measurements and system models, the EMS may allocate current commands to individual battery circuits based on their SOC and other operational constraints.

The EMS architecture supports modularity, allowing individual battery circuits to be added, removed, or isolated without interrupting overall system operation. The control framework may include fault detection and isolation logic. Upon identifying an outlier or degraded module, the EMS may disengage the associated converter and rebalance the system using the remaining healthy units.

### Functional Control and Features for Modularity and Reliability

The EMS is configured to regulate current flow throughout the system to maintain stability, optimize efficiency, and extend battery life. Through coordinated control of DC-DC converters and embedded algorithms, the EMS may dynamically adjust current commands, duty cycles, or voltage targets to accommodate real-time conditions.

In multi-source configurations, the EMS may implement load-sharing schemes, such as droop control or master-slave control logic, to apportion current among battery circuits or generation units. These control schemes may also be responsive to SOH and temperature data, enabling adaptive behavior as modules age or operating conditions change.

A further function of the EMS is balancing SOC across distributed battery circuits. The EMS may reduce the load on low-SOC modules and increase usage of high-SOC modules until SOC values converge. In systems comprising heterogeneous battery technologies or aging modules, the EMS may apply differentiated control parameters to maximize total usable energy while preventing over-discharge or over-charge conditions.

The EMS may incorporate local and centralized fault detection systems. Each battery circuit may be monitored for over-voltage, under-voltage, over-current, thermal excursions, or internal failure indicators. Upon detecting a fault, the EMS may initiate protective actions including converter shutdown, contactor opening, or thermal derating. Fault notifications may be propagated to operators, system logs, or supervisory controllers via wired or wireless communications.

Importantly, the EMS supports heterogeneous integration. Battery strings with different chemistries, capacities, or manufacturers may be deployed on the same DC bus, with converter-level isolation preserving operational independence. Converter control parameters may be tailored based on stored or learned characteristics of each string. The EMS may recalibrate SOC or SOH tracking for aging modules and reallocate load accordingly.

The modular and scalable design of the EMS enables deployment in configurations ranging from small vehicle battery packs to utility-scale energy storage installations. The EMS control architecture may automatically detect, configure, and manage newly added or replaced battery circuits. Hierarchical or agent-based control models may be implemented to distribute control tasks between local module controllers and central EMS coordinators.

In summary, the EMS disclosed herein enables flexible, fault-tolerant, and data-driven energy management for both mobile and stationary applications. Through modular converter integration, dynamic current regulation, and system-wide coordination of battery behavior, the EMS supports safe and efficient energy storage operation across a wide range of use cases.

### Kits

Any device, system, method, or controller described elsewhere herein may be readily implemented, organized, or offered as part of a battery balancing kit. As used in this context, a "kit" refers to a packaged or modular assembly comprising one or more hardware components-such as DC-DC converters, controllers, wiring, connectors, housings, or software storage media-configured to be integrated into an existing or newly designed energy storage system. The constituent elements of the kit may be preassembled or provided in separate modules, and may be arranged for installation by an end user, system integrator, or original equipment manufacturer (OEM). In various implementations, the kit may include any sub-combination of the control logic, energy routing hardware, sensor interfaces, or communication elements disclosed herein, provided they are adapted for use in a coordinated manner to regulate current distribution across parallel-connected battery circuits. Accordingly, references to control architectures, fault-handling routines, balancing methods, or system-level strategies should be understood as optionally forming part of a kit, whether disclosed individually or in combination. The following paragraphs provide examples of how such a kit may be applied across a range of vehicle and infrastructure systems.

In various implementations, the battery balancing kit disclosed herein can be used to retrofit or upgrade electrically driven or hybridized transportation systems across on-highway, off-highway, and rail applications. For on-highway applications, such as medium- and heavy-duty vehicles configured for urban or long-haul transport, the kit can be integrated into existing energy storage architectures to accommodate new battery modules without requiring wholesale replacement of legacy systems. This allows the vehicle to incorporate batteries with varying chemistries, capacities, or states of health, and the kit's controller coordinates current distribution using system data to ensure safe and efficient operation. For instance, where some battery modules are partially degraded and others are newly installed, the controller may allocate current preferentially to the healthier modules, thereby extending the usable life of the system while preventing overstress on weaker batteries.

In off-highway applications, such as construction, mining, or agricultural equipment, the kit enables hybridization or full electrification using heterogeneous energy storage resources. These vehicles often face highly variable load demands, including repeated cycles of heavy acceleration, regenerative braking, or idle operation. The kit may be configured to manage multiple strings of batteries optimized for either high power or high energy delivery, and can optionally incorporate ultracapacitor-based storage elements. In such scenarios, the control architecture dynamically adjusts current commands based on instantaneous operational parameters-such as torque demands, temperature, and state of charge-to optimize performance, reduce thermal stress, and prevent simultaneous charging and discharging within the system. This results in energy-efficient operation and allows for robust thermal and lifecycle management.

For rail transport applications, including freight or passenger locomotives employing diesel-electric or fully electric traction, the kit may be installed to augment or replace existing battery systems. Locomotive platforms are often subject to operational constraints that demand high peak power output during acceleration and energy absorption during regenerative braking. The disclosed kit allows for modular deployment of new battery technologies in parallel with legacy systems and provides the ability to isolate underperforming or faulty strings in real time. The controller facilitates charge balancing across independent circuits using current commands derived from centralized control logic, thereby enabling stable integration into high-voltage direct current (DC) link architectures common in such propulsion systems.

Overall, the battery balancing kit enhances the adaptability of electrified transport systems by enabling modular battery replacement, chemistry-agnostic expansion, and fault-tolerant operation. It is particularly suited for retrofit applications where maintaining compatibility with existing infrastructure and managing aging battery modules are critical design requirements. By providing per-string DC-DC conversion and system-wide current coordination based on charge state, health, chemistry, and thermal parameters, the kit offers a flexible and scalable upgrade path for modernizing energy storage systems in a wide range of transportation environments.

### Practical Examples

### Example 1: No Requirement to Balance Battery SOC

In one practice implementation, Battery A can be at 500V, and DC-DC converter A can step-up 500V to 1000V. Battery B can be at 600V, and DC-DC converter B can step-up 600V to 1000V. Although Battery A and B have different voltages (and thus different SOC values), their DC-DC converters can step-up their voltages to the same level. In this way, the architecture avoids using a higher-voltage battery to charge a lower-voltage battery.

Balancing the SOC further to principles of the present disclosure can improve upon this example. As a first principle, it can be best to keep SOC of a battery within 20%-80%. When a battery's SOC is greater than 80% or less than 20%, it can be more difficult to charge or discharge the battery, resulting in loss of some charging and/or discharging capability. To keep all the batteries' SOCs within 20%-80%, one strategy is to keep all SOCs at the same level and increase/decrease the SOC at the same pace. If any SOCs separate from the others, control architecture can distribute the charging or discharging current in such a way that the SOC difference becomes smaller. For example, Battery A is at 60% SOC and Battery B is at 50% SOC. When there is a discharging current command of 100A, the control architecture can direct Battery A to discharge at 70A and direct Battery B to discharge at 30A. Because Battery A is discharging more current, its SOC will decrease faster than Battery B. After a time, Battery A and B will have similar SOC, and then the control architecture can direct Batteries A and B to discharge the same amount of current. Under these circumstances, the control architecture does not use Battery A to charge Battery B but discharges them at the same time -- albeit with different currents -- to balance their SOCs over time.

### Example 2: Allocating Battery Usage Based on SOH

In another example, further still to principles of the present disclosure, the control architecture can use the battery with higher SOH more often. In some cases, balancing SOH may conflict with balancing SOC. In those cases, the control architecture can employ one or more measure to manage those tradeoffs. As alluded to above, SOH is like the percentage of remaining lifetime. SOH can be estimated based on voltage/current measurement. Ideally, the control architecture can manage all batteries such that all batteries age at the same speed to postpone replacing a battery pack when it reaches its end of life.

Understanding these principles, systems 10, 110 described above can be adapted to incorporate batteries having different chemistries (e.g., due to design and/or manufacturing differences). For instance, batteries can be chosen based on certain power requirements, and the systems 10, 110 can select batteries of differ chemistries based on torque demands on the systems 10, 110. Further to this point, say that the plurality of battery circuits (sometimes referred to herein as "strings") includes at least one circuit with high-power batteries (e.g., a "high-power circuit") and at least one circuit with high-energy batteries (e.g., a "high-energy circuit"). A high-power battery can rapidly release any stored energy while high-energy batteries slowly release any stored energy.

Combining this dynamic with the control architectures disclosed elsewhere herein, the systems 10, 110 can be configured to provide continuous supply based on a present or expected demand. For instance, when the load would benefit from current supplied from the high-power circuit, the control architecture can isolate all other battery circuit such that current is drawn only from the high-power circuit. On the other hand, when the load would benefit from current supplied from the high-energy circuit, the control architecture can isolate all other battery circuits such that current is drawn only from the high-energy circuit.

Depending on the amount and nature of the demand, the system can leverage some of the battery strings to meet it. As a quick example of this feature, the systems 10, 110 can use a high-power battery with a maximum 500 kW discharge capability and a high-energy battery with a maximum 250 kW discharge capability in concert. to leverage strengths of each battery. If the load is a very stable 250 kW, the system can use 250 kW from the high-energy battery to meet the power demand. If suddenly the power demand increases to 750 kW, the system can use 500 kW from the high-power battery and a 250 kW from the high-energy battery to meet the power demand. During this operation, the system can still perform balancing based on SOC and any current limits for example.

With such a setup, each battery string has a dedicated DC-DC converter such that the voltage in each string does not need to be brought to the same level at the DC bus because each battery string can operate independently from others, being brought online or offline by the dedicated DC-DC converter.

### Example 3: On-Highway Hybrid Vehicle

In an example implementation of this aspect of the disclosure, the system 210 can be integrated into an on-highway hybrid vehicle. Such vehicles can employ numerous operation modes, some or all of which can leverage historical data (e.g., drive patterns, topologies, geographical locations, etc. or combinations thereof) and lookahead data (e.g., roadmap and/or navigational data). Traditional hybrids maintain an SOC at about 50% to receive or provide power using a battery rather than a connected internal combustion engine (or "ICE"). Energy from the battery is used to supplement the ICE where possible (e.g., with the battery at 50% SOC), or if the battery is expended, the ICE charges the battery to about 50%. However, the hybrid system of the present disclosure, can minimize when the ICE is used to charge the battery. In a lookahead, the vehicle is made aware of potential regen opportunities along its trajectory and can make preparations so that the battery is not full at the regen opportunity. Lookahead is especially useful in mining, where the routes are predictable and often duplicated throughout the work. Regen generally occurs at downhills such that all peak power is stored at or near a bottom of the route. If the battery is already full at downhills, then no regen may occur.

Employing system 210 can be advantageous in this example. If there is a regen event ahead, sometimes the potential regen is more than batteries can capture (in kW) so the vehicle may send excess regen to resistors to expel as heat. Alternatively, with system 210, the vehicle can instead send high regen energy to a high-power battery string (or ultracapacitor string) and/or coordinate sending portions of the high regen energy between a high-power battery string (or ultracapacitor string) and a high-energy battery string. In a further alternative, the system 210 can operate the vehicle using high-energy batteries in combination with high-power batteries and/or ultracapacitors such that the vehicle operates without the ICE. Under these circumstances, the high-power batteries and/or ultracapacitors can "function" in concert with the high-energy batteries in a manner that is similar to the ICE discussed above.

### Example 4: High-Energy Battery EV

One skilled in the art will appreciate that similar principles can be applied to a battery electric vehicle. Now instead of an ICE, the vehicle can have a system 210 with high-energy batteries for long-term needs (e.g., non-peek loads) and high-power batteries for starting and stopping loads. For instance, the system can have at least one string (e.g., string A) as a high-power battery string and at least one string (e.g., strings B-D) as a high-energy battery. The high-power batteries can operate like an ICE in a hybrid system as discussed above. The high-power battery can be kept at about 50% SOC to be ready to give and receive large amounts of energy. SOCs for the high-energy batteries can be kept close to each other (e.g., using current adjustments) as discussed elsewhere herein. Keeping the SOC about the same maximizes battery life to minimize depth of discharge and minimize one from overcharging. In this way, the system 210 can maximize the life and number of cycles of the high-energy batteries. From a maintenance perspective, this allows batteries to drain and be replaced all at once or high-energy batteries at once without having to change the high-power battery, for instance. This can be a significant cost savings if the high-power battery is used sparingly, enabling higher reliability given that the high-energy batteries tend to have better serviceability or availability. A tradeoff that the system 210 can balance is performance with high-energy or high-power characteristics versus managing life of the high-energy and high-power batteries.

### Example 5: Arbitration Object

If, for example, there is a demand of 1000 amps with 5 converters running at 200 amperes each. Default can be commanding 200 amperes for each one. If current limits allow 210 amps, the current command to a battery circuit with an SOC lower than all other batteries can be reduced to 180 amperes, and the 20 ampere reduction can be compensated by increasing the default 200 amperes to 205 amperes in the 4 other battery circuits. The current limit is a function of the state of charge, temperature battery chemistry and battery age provided by a manufacturer of the battery. The system can respect the current limit.

### Guidance

The following section provides interpretive guidance for understanding and applying the principles described in this disclosure. It outlines key concepts related to embodiment flexibility, parameter variation, structural adaptability, and claim interpretation for a battery system for intelligently distributing current among multiple batteries. While this section introduces representative principles that help practitioners interpret the scope and implementation of the disclosed systems, it is not exhaustive and should not be construed as limiting. Rather, it serves to support a clear, adaptable, and technically grounded understanding of the embodiments and their potential equivalents under applicable patent law.

While this invention has been described as having exemplary designs, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements. The scope is accordingly to be limited by nothing other than the appended claims, in which reference to an element in the singular is not intended to mean "one and only one" unless explicitly so stated, but rather "one or more." Ranges provided in this disclosure should be interpreted to include both their stated endpoints and any intermediate values, unless explicitly indicated otherwise. Unless otherwise stated, a range or single value should be understood to include values that one of ordinary skill in the art would deem generally equivalent or sufficiently close for the intended function, including values that vary by plus or minus a reasonable percentage appropriate for the technical field. Phrases such as "generally within a range," "approximately," "about," "substantially," "roughly," "sufficiently," or similar qualifiers, when used with ranges or values, are intended to allow for practical engineering and manufacturing tolerances, measurement uncertainty, and performance margins without limiting the claims to absolute numerical boundaries. Where a single value or limit is disclosed without an explicit range, it should be interpreted as encompassing that value and all functionally equivalent values within such reasonable variation, consistent with the doctrine of equivalents.

Use of modifiers such as "approximately," "generally," "substantially," "sufficiently," and similar terms is intended to capture acceptable variation that does not materially affect the intended operation or performance of the described system. These terms do not narrow the scope of the claims to exact figures unless expressly stated otherwise.

Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B or C may be present in a single embodiment; for example, A and B, A and C, B and C, or A and B and C.

Systems, methods and apparatus are provided herein. In the detailed description herein, references to "an example," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic with the benefit of this disclosure in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. § 112(f), unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

For the purposes of promoting an understanding of the principles of the present disclosure, reference is made to the embodiments illustrated in the drawings, which are described elsewhere herein. The exemplary embodiments disclosed herein are not intended to be exhaustive or to limit the disclosure to the precise form disclosed in the detailed description. Rather, these exemplary examples were chosen and described so that others skilled in the art may utilize their teachings.

The terms "couples," "coupled," and variations thereof are used to include both arrangements wherein two or more components are in direct physical contact and arrangements wherein the two or more components are not in direct contact with each other (e.g., the components are "coupled" via at least a third component), but yet still cooperate or interact with each other. Furthermore, the terms "couples," "coupled," and variations thereof refer to any connection for machine parts known in the art, including, but not limited to, connections with bolts, screws, threads, magnets, electro-magnets, adhesives, friction grips, welds, snaps, clips, etc.

Throughout the present disclosure and in the claims, numeric terminology, such as first and second, is used in reference to various components or features. Such use is not intended to denote an ordering of the components or features. Rather, numeric terminology is used to assist the reader in identifying the component or features being referenced and should not be narrowly interpreted as providing a specific order of components or features.

One of ordinary skill in the art will realize that the embodiments provided can be implemented in hardware, software, firmware, and/or a combination thereof. Programming code according to the embodiments can be implemented in any viable programming language such as C, C++, HTML, XTML, JAVA or any other viable high-level programming language, or a combination of a high-level programming language and a lower level programming language.

As used herein, "battery" or variations thereof can refer to one of numerous different types, each of which is recognizable by one skilled in the art. For instance, "battery" can include a collection of battery cells, battery modules, module-to-pack arrangements, cell-to-pack arrangements and the like. Such variations have been contemplated and are well within the scope of this disclosure.

The structures, materials, methods, and configurations described herein are intended to illustrate, not limit, the scope of the invention. All modifications, substitutions, equivalents, and functional alternatives that achieve the described objectives using different arrangements-whether now known or later developed-are intended to fall within the scope of the appended claims and are protected under applicable doctrines of patent law, including the doctrine of equivalents.

## Claims

1. A battery system for distributing current among multiple batteries, the battery system comprising:
a plurality of battery circuits connected in parallel, each battery circuit in the plurality of battery circuits comprising:
one or more batteries (12A-12D) connected in series and/or parallel, each battery in the one or more batteries being configured to store energy for use in the battery system; and
an interface comprising a DC/DC converter (14A-14D) operatively connected to the one or more batteries, the interface being configured to control, based on system data, current flow to the one or more batteries (12A-12D) in the respective battery circuit during operation of the battery system to thereby facilitate balancing each of the one or more batteries in the battery system based on operational parameters included in the system data, the operational parameters including at least one of current, state of charge, and state of health.

2. The battery system of claim 1, wherein the system data includes parameters corresponding to a state of charge and a state of health for each battery in the one or more batteries.

3. The battery system of claim 2, wherein the system data further includes parameters corresponding to at least one of a chemistry and a temperature for each battery in the one or more batteries.

4. The battery system of any of the preceding claims, wherein the interface is further configured to control, based on the system data, the current flow to the one or more batteries such that the one or more batteries are designed to operate independently from other batteries in the battery system.

5. The battery system of any of the preceding claims, further comprising a controller (72) operatively connected to each interface, the controller being configured to receive and process the system data from the plurality of battery circuits.

6. The battery system of claim 5, wherein the controller (72) is further configured to distribute current in the battery system to keep a state of charge of each of the one or more batteries (12A-12D) within a sufficiently small vicinity of an average state of charge for the battery system, and optionally wherein the controller is further configured to distribute current by biasing an amount of current commanded by a given battery circuit in the plurality of battery circuits until the operational parameters of each of the one or more batteries are within the sufficiently small vicinity of an average of the operational parameters for the battery system.

7. The battery system of claim 5 or 6, wherein the plurality of battery circuits includes a first battery circuit and a second battery circuit, the first battery circuit having a first battery with a first chemistry, the second battery circuit having a second battery with a second chemistry that is different from the first chemistry, and wherein the controller (72) is further configured to receive an indication that the first chemistry is different from the second chemistry and to distribute current differently based on the chemistry of each battery circuit.

8. The battery system of any of claims 5 to 7, wherein the controller (72) is further configured to receive an indication that at least one battery of the one or more batteries is faulty and, in response, to exclude the at least one battery that is faulty from the balancing, and optionally wherein the at least one battery is determined to be faulty if the at least one battery has reached its end of life.

9. The battery system of any of claims 5 to 8, wherein the controller (72) is further configured to prevent any of the plurality of batteries from being charged when the battery system is delivering power, and/or wherein the controller is further configured to prevent any of the plurality of batteries from being discharged when the battery system is receiving power.

10. The battery system of any of the preceding claims, wherein the battery system is integrated into an integrated power system in which the plurality of battery circuits comprises three or more battery circuits.

11. A method of operating the battery system of any of the preceding claims, the method comprising:
receiving an indication of a fault in the battery system;
controlling current flow at a battery that is experiencing the fault so as to isolate the battery from operation using a control logic; and
continuing, using the control logic, operation among non-anomalous batteries of the battery system while minimizing time periods where there is both charging and discharging of batteries in the battery system.

12. The method of claim 11, further comprising controlling the current flow at the battery based on operational parameters, wherein the operational parameters optionally correspond to at least one of:
current flow at the battery in a respective battery circuit among the plurality of battery circuits that are connected in parallel;
state of charge of the battery in the respective battery circuit;
state of health of the battery in the respective battery circuit;
current limits of the battery in the respective battery circuit;
temperature of the battery in the respective battery circuit; and
chemistry of the battery in the respective battery circuit.

13. A non-transitory computer-readable medium storing a set of instructions for operating the battery system of any of claims 1 to 10, the set of instructions comprising:
one or more instructions that, when executed by one or more processors of a device, cause the device to:
receive an indication of a degradation or fault in the battery system based on system data that corresponds to:
current flow at a battery in a battery circuit among the plurality of battery circuits; and
state of charge of the battery in the battery circuit;
control current flow at the battery that is experiencing the fault so as to isolate the battery from operation using a control logic; and
continue, using the control logic, operation among non-anomalous batteries of the battery system while minimizing time periods where there is both charging and discharging of batteries in the battery system.

14. The non-transitory computer-readable medium of claim 13, wherein the indication of the degradation or fault is based on an imbalance in the system data relative to a measure of central tendency of the system data, and wherein the instructions further cause the device to control the current flow at the battery to be within current limits for each of the battery circuits that are connected in the battery system, wherein the system data optionally further corresponds to at least one of:
state of health of the battery in the battery circuit;
temperature of the battery in the battery circuit; and
chemistry of the battery in the battery circuit.

15. The battery system of claim 13 or 14, implemented as a kit, the kit comprising:
a plurality of DC/DC converters (14A-14D), each configured to be operatively connected to a respective battery or battery circuit; and
a controller configured to execute the instructions stored on the non-transitory computer-readable medium of claim 13 or 14;
wherein the kit is configured for integration into a vehicle or stationary energy storage system to enable distributed current control and fault-tolerant battery operation based on system data.
